# EUROPEAN PATENT APPLICATION

(11) **EP 3 479 700 A1**
(43) Date of publication of application: **08.05.2019**
(21) Application number: 16907267.5
(22) Date of filing: 29.06.2016
(51) Int. Cl.: A23K 10/12, A23K 10/37, A23K 20/10

(54) **AGENT FOR IMPROVING FEED EFFICIENCY IN LIVESTOCK, LIVESTOCK FEED FOR PROMOTING BODY WEIGHT GAIN, METHOD FOR FEEDING LIVESTOCK, AND METHOD FOR SUPPRESSING METHANE GENERATION**

(71) Applicant: Menicon Co., Ltd., Nagoya-shi Aichi 460-0006 (JP); Sanyu Plant Service Co., Ltd., Sagamihara-shi, Kanagawa 252-0132 (JP); Starbucks Coffee Japan, Ltd., Tokyo 141-0021 (JP)
(72) Inventor: MATANO, Yutaka, Nagoya-shi Aichi 452-0805 (JP); KUSUMOTO, Yasutaka, Sagamihara-shi Kanagawa 252-0132 (JP); SEKINE, Kuniko, Tokyo 141-0021 (JP)
(74) Representative: Petraz, Gilberto Luigi
(86) International application number: PCT/JP2016/069298
(87) International publication number: WO 2018/003034

(57) **Abstract**

Provided are: an agent for improving feed efficiency in livestock, said agent being capable of enhancing the functions of a feed; a livestock feed for promoting body weight gain; a method for feeding livestock; and a method for suppressing methane generation. The agent according to the present invention for improving feed efficiency in livestock comprises a coffee component and has been fermented with a bacteriocin-producing lactic acid bacterium. The coffee component may comprise at least one member selected from among hydroxycinnamic acid and an ester thereof. The bacteriocin-producing lactic acid bacterium may be at least one member selected from among *Lactobacillus delbrueckii subsp. lactis* and *Lactobacillus brevis.* The livestock may be ruminants.

## Description

### TECHNICAL FIELD

The present invention relates to a feed efficiency-improving agent for livestock and a weight gain-promoting feed for livestock that contain a coffee component, a method for raising livestock, and a method for reducing methane generation.

### BACKGROUND ART

Currently, a large amount of food residues, such as food manufacturing byproducts, are discarded by, for example, the food service and restaurant industries. Under the present circumstances, most of food residues are incinerated or used for reclamation. Then, from the past, methods for using food residues as a recyclable food waste to produce a feed have been studied from the viewpoint of the effective use of resources. Effective use of food residues is also effective from the viewpoint of reducing the load on the environment.

In recent years, along with the worldwide consumption growth of coffee, the treatment of manufacturing wastes thereof has become controversial. Coffee bean cake has high contents of water and fibers, so it has been difficult to subject it directly to incineration treatment or reuse for feed. For example, Patent Document 1 discloses a livestock feed utilizing coffee bean cake as an attempt to effectively use manufacturing wastes of coffee. This livestock feed is obtained by mixing a probiotic agent such as *Bacillus* with coffee bean cake and thereafter, fermenting the mixture under an aerobic situation, wherein it has a decreased caffeine content than before the fermentation and an improved taste for livestock.

### PRIOR ART LITERATURE

### PATENT LITERATURE

Patent Document 1: Japanese Laid-Open Patent Publication No. 2013-179917

### SUMMARY OF THE INVENTION

### PROBLEM TO BE SOLVED BY THE INVENTION

However, regarding the livestock feed disclosed in Patent Document 1, the study has been made on use of coffee bean cake for feed, which includes an improvement of taste of coffee bean cake, and the enhancement in the functionality of feed have not been studied sufficiently.

An object of the present invention is to provide: a feed efficiency-improving agent for livestock capable of enhancing the functionality of feed; a weight gain-promoting feed for livestock; a method for raising livestock; and a method for reducing methane generation.

### MEANS FOR SOLVING THE PROBLEM

The present invention is based on the finding that coffee bean cake or the like that has been fermented by use of a bacteriocin-producing lactic acid bacterium can enhance the functionality of feed.

In order to achieve the above object, a feed efficiency-improving agent for livestock according to one aspect of the present invention is characterized by containing a coffee component and being fermented by a bacteriocin-producing lactic acid bacterium.

The coffee component preferably includes at least one selected from hydroxycinnamic acids and esters thereof. The bacteriocin-producing lactic acid bacterium is preferably at least one selected from *Lactobacillus delbrueckii subsp. lactis* and *Lactobacillus brevis.* The livestock is preferably a ruminant.

A weight gain-promoting feed for livestock according to another aspect of the present invention is characterized by containing a coffee component and containing a component fermented by a bacteriocin-producing lactic acid bacterium. It is preferred that the coffee component includes at least one selected from hydroxycinnamic acids and esters thereof; and the bacteriocin-producing lactic acid bacterium is preferably at least one selected from *Lactobacillus delbrueckii subsp. lactis* and *Lactobacillus brevis.*

A method for raising livestock according to another aspect of the present invention is characterized by mixing the feed efficiency-improving agent for livestock with a feed, and administering or feeding the mixture to livestock.

A method for reducing methane generation according to another aspect of the present invention is characterized by mixing the feed efficiency-improving agent for livestock with a feed, administering or feeding the mixture to livestock, and raising the livestock.

### EFFECTS OF THE INVENTION

The present invention succeeds in imparting an excellent functionality-improving effect to a livestock feed.

### BRIEF DESCRIPTION OF THE DRAWINGS

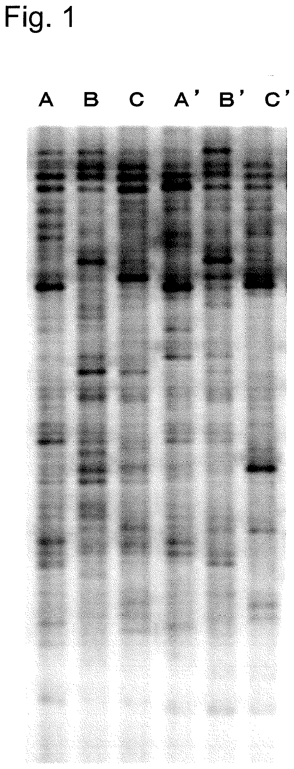

Fig. 1 is a photograph of denaturing gradient gel electrophoresis in Test Example 5.

### MODES FOR CARRYING OUT THE INVENTION

### (First Embodiment)

A first embodiment, which gives a concrete form to a feed efficiency-improving agent for livestock of the present invention (hereinafter, referred to simply as "feed efficiency-improving agent"), will now be described in details. The feed efficiency-improving agent of this embodiment, which contains a coffee component and is fermented by a specific lactic acid bacterium, is applied to a livestock feed, thereby improving the feed efficiency. The coffee component is a component contained in green coffee beans or roasted coffee beans, and a typical example thereof is a coffee polyphenol. Examples of the coffee polyphenol include a hydroxycinnamic acid and esters thereof. Specific examples of the hydroxycinnamic acid include caffeic acid, cinnamic acid, and chlorogenic acid. These coffee components may be contained in the feed efficiency-improving agent alone or in combination of two or more kinds.

The coffee component contained in the feed efficiency-improving agent is derived from a material containing the coffee component. As the material containing the coffee component, a coffee bean is preferably used from the viewpoint of the easy availability. A kind of coffee bean is not particularly limited, known coffee beans may be used. Specifically, listed are *Coffea arabica* L., *Coffea canephora var. robusta* 'Robusta' and *kouilouensis* 'Conilon', *C*. *liberica,* and hybrids thereof. Coffee beans may be used in an unroasted state or a heat-treated state such as a roasted state. In addition, as the material containing the coffee component, coffee extracts obtained from roasted coffee beans in accordance with a known extraction method, residues (coffee bean cake) after extraction of a coffee extract from roasted coffee beans, and others may be used. An extraction method of a coffee extract is not particularly limited, and examples thereof include solvent extractions, such as water (hot water) extraction, alcohol extraction, and water-containing alcohol extraction; vapor extraction; supercritical extraction; and others. Each of known extraction methods may be employed. The materials containing the coffee component may be used alone or in combination of two or more kinds thereof. Among the coffee component-containing materials, coffee bean cake is preferably used from the viewpoint of the effective use of resources.

The feed efficiency-improving agent is obtained by fermenting a coffee component-containing material by bacteriocin-producing lactic acid bacteria. Some lactic acid bacteria produce an antimicrobial peptide called bacteriocin. As an example of bacteriocin, nisin A produced by *Lactococcus lactis subsp. lactis* is widely known. Any bacteriocin-producing lactic acid bacterium may be used in this embodiment as long as it produces bacteriocin under the presence of a coffee component, and *Lactobacillus* having an excellent ability to produce bacteriocin is preferred. More specifically, examples thereof include *Lactobacillus acidophilus, Lactobacillus amylovorus, Lactobacillus brevis, Lactobacillus crispahtus, Lactobacillus delbrueckii subsp. lactis, Lactobacillus fermenturm, Lactobacillus gasseri,* and *Lactobacillus pentosus.* These bacteriocin-producing lactic acid bacteria may be used alone or in combination of two or more thereof. Among these lactic acid bacteria of *Lactobacillus, Lactobacillus delbrueckii subsp. lactis,* and *Lactobacillus brevis* are more preferably used since they have an excellent ability to produce bacteriocin under acid conditions and excellent growth characteristics even under an environment including a coffee polyphenol.

After a mixture is prepared by mixing bacteriocin-producing lactic acid bacteria with a coffee component-containing material, fermentation treatment is conducted. The fermentation treatment is preferably conducted under an anaerobic condition. The fermentation treatment may be conducted in a stationary state or with stirring. In addition, from the viewpoint of shortening a treatment period and reducing treatment labor, a known raw material processing apparatus for livestock feed may be preferably used. Further, if needed, an organic substance material as another component or an organic acid as a pH adjusting agent may be blended in the mixture. An organic substance material may be blended to add sugar to the mixture and to promote fermentation. Specific examples of the organic substance material include soybean milk cake, oil cake, rice bran, wheat bran, corn steep liquor, brown sugar, soybean oil cake, yeast extract cake, and beer cake. These organic substance materials may be used alone or in combination of plural kinds. An organic acid may be blended to lower pH to the acidity and to reduce the generation of putrefactive bacteria during fermentation treatment. Specific examples of the organic acid include citric acid, glycolic acid, succinic acid, tartaric acid, lactic acid, malic acid, acetic acid, oxalic acid, maleic acid, fumaric acid, propionic acid, and salts of these organic acids. These organic acids may be used alone or in combination with plural kinds.

Fermentation conditions may be appropriately determined depending on the kind of lactic acid bacteria. The fermentation temperature is not particularly limited as long as it is a temperature that allows the growth of lactic acid bacteria; however, it is preferably 10 to 45°C, and more preferably 25 to 40°C. The fermentation period may be appropriately determined in accordance with the kind of lactic acid bacteria and the fermentation temperature; however, it is preferably 1 to 14 days, and more preferably 2 to 4 days. A shorter fermentation period does not allow a sufficient growth of lactic acid bacteria, while a longer fermentation period allows the growth of lactic acid bacteria to enter a decline stage to reduce a fermentation speed.

The feed efficiency-improving agent obtained in the above manner may be directly administered or fed to livestock; or it may be mixed in a livestock feed and administered or fed. Examples of livestock include cattle, pigs, horses, sheep, goats, and birds. Usages of livestock are not particularly limited, and livestock may be for any of meat, dairy, shearing or leather, or others. Among these, the feed efficiency-improving agent is preferably used as a feed for ruminants, such as cattle, goats, and sheep. The feed efficiency-improving agent improves fermentation caused by microorganisms present in a stomach, particularly the first stomach (rumen), of a ruminant, consequently enabling ingested feed to be utilized more efficiently in the body of livestock.

The feed efficiency-improving agent of this embodiment exhibits, upon being ingested, an action to improve the functionality of ingested feed, that is an excellent action to improve feed efficiency. When the feed efficiency-improving agent of this embodiment is applied to dairy stock, it is expected that the improvement of feed efficiency provides effects such as an increase of milk yield and an improvement of milk quality. When it is applied to livestock for meat, it is expected to produce effects to prevent the deterioration of meat quality caused by oxidation and to maintain and/or improve the meat quality. In addition, it is expected to produce effects to give a weight gain to administered or fed livestock and to improve the physical constitution and condition of administered or fed livestock.

The feed efficiency-improving agent of this embodiment can provide the following advantages.
(1) The feed efficiency-improving agent of this embodiment contains a coffee component and is fermented by a bacteriocin-producing lactic acid bacterium. Thus, expected improvement effects of the feed efficiency include: upon application to dairy stock, effects such as an increase of a milk yield and an improvement of the milk quality; and upon application to livestock for meat, effects to prevent the deterioration of meat quality caused by oxidation and to maintain and/or improve the meat quality. Further, expected improvement effects of the feed efficiency include effects to give a weight gain to administered or fed livestock and to improve the physical constitution and condition of administered or fed livestock.
(2) In the case that *Lactobacillus delbrueckii subsp. lactis* or *Lactobacillus brevis* are used as the bacteriocin-producing lactic acid bacteria, the fermentation by the bacteriocin-producing lactic acid bacteria is not inhibited even when a material containing a hydroxycinnamic acid and/or an ester thereof as a coffee polyphenol is used as a raw material for fermentation; and the fermentation treatment is promoted. This enables a material such as coffee bean cake containing a coffee component to be changed to a material to further improve the functionality of feed.
(3) In the case that the feed efficiency-improving agent of this embodiment is administered or fed to ruminants, the fermentation action by microorganisms present in the stomach of a ruminant is improved, and as a result, ingested feed would be more efficiently used in the body of livestock.
(4) When coffee bean cake is used as the coffee component-containing material, coffee residues immediately after extraction with boiling water have a high water content; and when they are used as a feed without being changed, they may be decayed during a long-term preservation. However, lactic acid fermentation treatment by bacteriocin-producing lactic acid bacteria lowers pH of the material for fermentation, consequently enabling a long-term preservation. Further, use of coffee bean cake can provide an inexpensive feed efficiency-improving agent, allowing the effective use of resources.
(5) Examples of food residues containing a lot of polyphenols include residues from production of tea drink. Polyphenols contained in tea leaves, such as catechin and epicatechin, are called as tannin due to their chemical properties. Tannin is known as becoming an insoluble substance by being strongly bound to a protein and a metal ion. It is known that tannin forms, for example, a tannin-protein complex in a rumen with a protein given as a nutrient component of feed in the digestive tract of a ruminant to cause indigestion. This makes it difficult for animals to ingest tea. Meanwhile, it is also known that coffee beans contains, as a coffee polyphenol, chlorogenic acid, or decomposed substances of chlorogenic acid such as quinic acid, caffeic acid, coumaric acid, and ferulic acid. However, a coffee polyphenol never form a complex with a protein unlike tannin, so it is easily applicable to animals such as livestock.

The above first embodiment may be modified as follows.
- A fermented component that contains a coffee component and is fermented by a bacteriocin-producing lactic acid bacterium may be used to form a weight gain-promoting feed for livestock, or a milk yield-increasing agent or a milk quality improving agent for diary stock.
- The feed efficiency-improving agent of the above embodiment may appropriately contain an additive, such as an excipient, various vitamins, various minerals, and nutritious supplement components, as long as it is contained in such a range of amount that the effects and intended use of the present invention are not impaired.

### (Second Embodiment)

A second embodiment, which gives a concrete form to a method for raising livestock of the present invention, will now be described in details. Hereafter, differences from the first embodiment are mainly described.

The method for raising livestock of this embodiment includes mixing the feed efficiency-improving agent of the above first embodiment with a feed, and administering or feeding to livestock. A feed is not particularly limited, and a known livestock feed may be appropriately employed depending on the kind of livestock.

A livestock feed and a feed efficiency-improving agent are mixed with each other in a mass ratio of, preferably 100:0.1 to 10, and more preferably 100:1 to 5 from the viewpoint of the enhancement of a feed efficiency-improving action, the economic efficiency, and the preference.

The method for raising livestock of this embodiment exhibits a more excellent action to improve the feed efficiency by administering or feeding the feed efficiency-improving agent to livestock with a livestock feed. In particular, it improves a fermentation action by microorganisms present in the stomach of a ruminant to reduce methane generation. More specifically, it significantly improves an intragastric environment, for example, by a decrease of archaebacterium, an increase of propionic acid, or a decrease of ammonia in the rumen of the stomach of a ruminant.

The method for raising livestock according to this embodiment has the following advantages in addition to the advantages of the first embodiment.
(6) The method for raising livestock of this embodiment allows the feed efficiency-improving agent to be administered or fed to livestock with a feed, thereby exhibiting a more excellent action to improve the feed efficiency.
(7) In the case that the method for raising livestock of this embodiment is applied to ruminants, the feed efficiency-improving agent is ingested with a livestock feed thereby to improve a fermentation action caused by microorganisms present in the stomach of a ruminant and to reduce methane generation. This can more efficiently exhibit effects such as an increase of a milk yield and an improvement of milk quality, and improvement effects of the feed efficiency such as an effect of weight gain of livestock.
(8) Even mixing of the feed efficiency-improving agent in a feed never decreases a total digestible nutrient (TDN) of the feed. That is, a coffee component-containing material is fermented by a bacteriocin-producing lactic acid bacterium, and this can upgrade the value of the coffee component-containing material as a feed component.

The above second embodiment may be modified as follows. - It may be formed as a method for reducing methane generation, which includes mixing the feed efficiency-improving agent of the above first embodiment with a feed, and administering or feeding to livestock to raise livestock.

### EXAMPLES

Next, the embodiments will be further specifically explained by referring to examples. Note that the present invention is not limited to the configurations described in the examples section.

### <Test Example 1: Selection of bacteriocin-producing lactic acid bacterium>

In the following experiments 1-1 and 2-1, various lactic acid bacteria were cultured under a predetermined environment, and whether or not the bacteria were grown was evaluated. In the following experiments 1-1 and 2-2, whether or not a bacteriocin-like substance was produced was evaluated.

### (Experiment 1-1)

First, each of various lactic acid bacteria shown in the following Table 1 was pre-cultured at 37°C for 16 hours in an MRS culture solution (manufactured by Difco Laboratories). Next, another MRS culture solution was newly prepared to which 0.1% by mass of chlorogenic acid hemihydrate (manufactured by Nacalai Tesque, Inc.) as a coffee polyphenol is added. 1% (v/v) of each of the pre-cultured lactic acid bacteria was inoculated in the chlorogenic acid-containing MRS culture solution and cultured at 37°C for 18 to 24 hours. Whether or not lactic acid bacteria were grown was determined by measuring the turbidity of a culture solution (absorbance at 660 nm). Turbidities are shown in the column for Experiment 1-1 of Table 1.

### (Experiment 1-2)

First, the culture solution, the turbidity of which was measured in the above Experiment 1-1, was centrifuged and a supernatant thereof was collected. The obtained supernatant was diluted by 100 times with a buffered sodium chloride-peptone solution (pH 7.2). In the case of a culture solution in which *Lactobacillus,* which is a lactic acid bacterium, was cultured, 50 µL of the diluted supernatant was: spotted on a nutrient agar medium, on which *Bacillus subtilis* PCI 216 had been smeared; and cultured at 37°C for 24 hours; and observed on whether or not an inhibitory zone was formed (halo formation) by production of a bacteriocin-like substance. In the case of a culture solution in which *Lactococcus,* which is a lactic acid bacterium, was cultured, 50 µL of the diluted supernatant was: spotted on a nutrient agar medium, on which *Lactobacillus plantarum* ATCC14917T had been smeared; and cultured at 37°C for 24 hours; and observed on whether or not there was a halo formation. For each lactic acid bacterium, whether or not there was a halo formation (+, -) is shown in the column for Experiment 1-2 of Table 1.

### (Experiment 2-1)

An experiment was conducted by the same method as in Experiment 1-1 except that an MRS culture solution was adjusted by use of lactic acid to have a pH of 3.8 and 1% (v/v) of each of pre-cultured lactic acid bacteria was inoculated in the column for Experiment 1-1; and whether or not lactic acid bacteria were grown was determined. Turbidities are shown in the column for Experiment 2-1 of Table 1.

### (Experiment 2-2)

The culture solution, the turbidity of which was measured in the above Experiment 2-1, was centrifuged and a supernatant thereof was collected. The obtained supernatant was diluted by 100 times with a buffered sodium chloride-peptone solution (pH 7.2). Whether or not there is a halo formation was determined by conducting an experiment by the same method as in Experiment 1-2. For each lactic acid bacterium, whether or not there was a halo formation is shown in the column for Experiment 2-2 of Table 1.

**[Table 1]**

| Lactic acid bacteria | No. of strain | Turbidity (absorbance 660 nm) | | Presence or absence of Halo formation | |
|---|---|---|---|---|---|
| | | Experiment 1-1 | Experiment 2-1 | Experiment 1-2 | Experiment 2-2 |
| *Lactobacillus acidophilus* | JCM1132 | 0.2 | 0.05 | + | - |
| *Lactobacillus amylovorus* | JCM1033 | 0.2 | 0.05 | + | - |
| *Lactobacillus buchneri* | JCM1115 | 0.05 | 0.05 | - | - |
| *Lactobacillus brevis* | ATCC367 | 0.2 | 0.2 | + | + |
| *Lactobacillus crispahtus* | JCM1185 | 0.2 | 0.05 | + | - |
| *Lactobacillus casei sub. casei* | JCM1134 | 0.05 | 0.05 | - | - |
| *Lactobacillus delbrueckii sub. bulgaricus* | JCM1002 | 0.05 | 0.05 | - | - |
| *Lactobacillus delbrueckii subsp. lactis* | JCM1248 | 0.2 | 0.2 | + | + |
| *Lactobacillus fermenturm* | JCM1173 | 0.2 | 0.05 | + | - |
| *Lactobacillus gasseri* | JCM1131 | 0.2 | 0.05 | + | - |
| *Lactobacillus plantarum* | JCM1149 | 0.2 | 0.2 | - | - |
| *Lactobacillus rhamnosus* | JCM1136 | 0.05 | 0.05 | - | - |
| *Lactobacillus pentosus* | ATCC8041 | 0.2 | 0.05 | + | - |
| *Lactococcus lactis subsp. lactis* | JCM5805 | 0.05 | 0.05 | - | - |

As shown in the column for Experiment 2-1 of Table 1, it was found that 8 kinds of lactic acid bacteria caused a halo formation in a culture solution containing chlorogenic acid as a coffee polyphenol. As shown in the column for Experiment 2-2, it was found that when a culture environment was under acid conditions, two kinds of lactic acid bacteria, *Lactobacillus delbrueckii subsp. lactis* and *Lactobacillus brevis* caused a halo formation.

### <Test Example 2: Preparation of feed efficiency-improving agent using coffee bean cake>

A feed efficiency-improving agent was prepared by using coffee bean cake as a raw material containing a coffee component. In addition to the coffee bean cake, bean cake (soybean milk cake) after soybean milk squeezing and wheat bran were added as sugar to promote the fermentation of lactic acid bacteria. In order to adjust a pH of a raw material mixture to an acidic side and prevent the mixture from being decayed at the time of fermentation, table vinegar was added as a pH adjusting agent. Used was a lactic acid bacteria-mixed feed, which was fermented by two kinds of bacteria, *Lactobacillus delbrueckii subsp. lactis* and *Lactobacillus brevis,* as bacteriocin-producing lactic acid bacteria. Raw materials shown in the following Table 2 were mixed; the mixture was degassed and fermented at 37°C for 14 days in a dark place without stirring; and thereby, a feed efficiency-improving agent was obtained.

**[Table 2]**

| Raw material | Content (% by mass) |
|---|---|
| Coffee bean cake | 80 |
| Soybean milk cake | 7.5 |
| Wheat bran | 7.5 |
| Table vinegar | 4.99 |
| Lactic acid bacteria-mixed feed | 0.01 |
| Total | 100 |

### (Components)

As components of the feed efficiency-improving agent obtained by fermentation treatment, a total digestible nutrient (TDN) and crude protein (CP) were measured. TDN is a total value of amounts of nutrients that are contained in feed and digested and adsorbed by livestock; and a higher value indicates a higher energy content in feed. For comparison, TDN and CP of a mixture before fermentation treatment were measured. Results are shown in Table 3.

**[Table 3]**

| Component content | Before fermentation | After fermentation |
|---|---|---|
| TDN (% by mass) | 45.7 | 75.0 |
| CP (% by mass) | 9.4 | 20.1 |

As shown in Table 3, it was confirmed that the fermentation treatment using bacteriocin lactic acid bacteria enhanced TDN and CP of coffee bean cake.

### (Antibacterial activity)

The antibacterial activity of the feed efficiency-improving agent obtained by fermentation treatment was measured. Each of 1 gram of the feed efficiency-improving agent; and 1 gram of a mixture before fermentation as a comparison subject was diluted with PBS by 10 times, and a supernatant thereof was collected. A minimal inhibitory concentration (MIC) was measured by the standard method of Japanese Society of Chemotherapy. As a test bacteria, *Bacillus subtilis* PCI 219 was used. Further, erythromycin, known as a macrolide antibiotic, was used as a positive control.

As a result, it was confirmed that an MIC of the supernatant obtained by diluting the feed efficiency-improving agent with PBS had an antibacterial activity equivalent to that of 1.56 µg/mL of erythromycin. The mixture before fermentation treatment was found as not having an antibacterial activity.

### <Test Example 3: Feeding test using a feed efficiency-improving agent>

The feed efficiency-improving agent obtained in Test Example 2 was used to prepare a feed containing the feed efficiency-improving agent (hereinafter, referred to "coffee-containing feed"). The coffee-containing feed was prepared by mixing raw materials shown in Table 4. As a comparison subject, prepared was a feed (control feed) not containing the feed efficiency-improving agent by mixing raw materials shown in Table 4. As components of each of the obtained feeds, TDN and CP in the dried feed were determined. Contents of raw materials of each feed; and TDN and CP values as components are shown in Table 4.

**[Table 4]**

| Raw material | Content (% by mass) | |
|---|---|---|
| | Control feed | Coffee-containing feed |
| Corn silage | 36.3 | 35.0 |
| Timothy hay | 5.6 | 5.2 |
| Sudan hay | 10.6 | 10.4 |
| Alfalfa hay | 10.6 | 10.4 |
| Commercially available mixed feed | 31.8 | 30.9 |
| Soybean cake | 3.4 | 3.3 |
| Feed efficiency-improving agent of Test Example 2 | - | 3.3 |
| Dicalcium phosphate | 1.1 | 0.8 |
| Common salt | 0.6 | 0.7 |
| Total | 100.0 | 100.0 |
| | | |

| <Component content in dried matter> | | |
|---|---|---|
| TDN | 71.2 | 72.5 |
| CP | 13.9 | 14.3 |

### (Feeding test 1)

Each of the obtained feeds was fed to dairy cows (Holstein: frequency of gestation of 2 to 3), and the milk yield was evaluated as the feed efficiency improvement effect. Each fed group was composed of 4 cows and the feeding was carried out for 1 month. An average feed intake (kg/day) and an average milk yield (kg/day) were each determined for one individual for 1-month period of feeding. An average body weight after the lapse of the feeding period, and contents of milk components of milk obtained from cattle were measured. Results are shown in Table 5.

**[Table 5]**

| Item for evaluation | Unit | Group fed with control feed | Group fed with coffee-containing feed |
|---|---|---|---|
| | | (n=4) | (n=4) |
| Average body weight | kg | 675.5 | 679.5 |
| Average feed intake | kg/day | 24.8 | 25.9 |
| Average milk yield | kg/day | 22.5 | 24.7 |
| | | | |

| <Milk component> | | | |
|---|---|---|---|
| Milk fat | % by mass | 4.81 | 4.38 |
| Milk protein | % by mass | 3.43 | 3.48 |
| Milk sugar | % by mass | 4.36 | 4.35 |
| Non-fat milk solid | % by mass | 8.80 | 8.85 |

As shown in Table 5, it was confirmed that the group fed with the coffee-containing feed had a large increase in the milk yield per body weight relative to the group fed with the control feed. It was thus confirmed that the intake of the coffee-containing feed provided an effect to improve the feed efficiency. In addition, no change in the milk components that affects the quality of milk was found in the group fed with the coffee-containing feed.

### (Feeding test 2)

The coffee-containing feed was fed to dairy cows (about 1750 cows, Holstein: frequency of gestation of 2 to 3) raised in stock farms in Hokkaido, and the milk yield was evaluated as the feed efficiency-improving action. During a period of feeding from December in 2013 to April in 2015, an average milk yield (kg/day) and contents of milk components of milk obtained from cattle were each measured for one cow for each month. For easy comparison, a rate of change (year-on-year basis) for each evaluation item from the same month in the previous year is also shown. Further, an adjustment was made so that the average body weight of dairy cows for each month is almost the same. Results are shown in Table 6.

**[Table 6]**

| Year/month for evaluation | | Average shipment of yield milk (kg/day) | Milk fat (% by mass) | Non-fat milk solid (% by mass) | Milk protein (% by mass) | Milk sugar (% by mass) |
|---|---|---|---|---|---|---|
| 2015 | April | 30.39 | 3.68 | 8.63 | 3.16 | 4.48 |
| 2014 | April | 30.18 | 3.64 | 8.62 | 3.12 | 4.50 |
| Year-on-year comparison | | 100.71 | 101.10 | 100.12 | 101.28 | 99.56 |
| | | | | | | |
| 2015 | March | 31.23 | 3.71 | 8.63 | 3.15 | 4.48 |
| 2014 | March | 29.98 | 3.74 | 8.67 | 3.15 | 4.52 |
| Year-on-year comparison | | 104.16 | 99.20 | 99.54 | 100.00 | 99.12 |
| | | | | | | |
| 2015 | February | 30.41 | 3.77 | 8.63 | 3.16 | 4.47 |
| 2014 | February | 29.20 | 3.79 | 8.67 | 3.14 | 4.53 |
| Year-on-year comparison | | 104.14 | 99.47 | 99.54 | 100.64 | 98.68 |
| | | | | | | |
| 2015 | January | 29.94 | 3.84 | 8.70 | 3.22 | 4.48 |
| 2014 | January | 28.38 | 3.81 | 8.71 | 3.18 | 4.53 |
| Year-on-year comparison | | 105.50 | 100.79 | 99.89 | 101.26 | 98.90 |
| | | | | | | |
| 2014 | December | 29.53 | 3.83 | 8.68 | 3.22 | 4.46 |
| 2013 | December | 26.77 | 3.78 | 8.68 | 3.16 | 4.52 |
| Year-on-year comparison | | 110.30 | 101.32 | 100.00 | 101.90 | 98.67 |

As shown in Table 6, an increase in the milk yield from the month (December in 2013) when the feeding started is confirmed. In addition, from the comparison to the same month in the previous year, it was confirmed that a longer period of feeding exhibited an increasing tendency in the milk yield. It is thus confirmed that an intake of the coffee-containing feed exhibited a feed efficiency-improving action. In addition, it was confirmed that a long-term and continuous intake of the coffee-containing feed further enhanced the feed efficiency-improving action. In addition, no change in the milk components that affects the quality of milk was found in the group fed with the coffee-containing feed.

### (Feeding test 3)

The coffee-containing feed or the control feed was fed to dairy cows (Holstein; frequency of gestation of 2 to 3) raised in stock farms in Kumamoto Prefecture, and milk yields are compared and evaluated as the feed efficiency-improving action. During a period of feeding from July to August in 2015, an average milk yield (kg/day) was measured for one cow for each month. Corporation was obtained from Stock Farm A (in Kamoto region; about 200 cows), Stock Farm B (in Kamoto region; about 100 cows), Stock Farm C (in Tamana region; about 80 cows), Stock Farm D (in Tamana region; about 40 cows), Stock Farm E (in Kumamoto region; about 50 cows), Stock Farm F (in Kumamoto region; about 50 cows), Stock Farm G (in Kikuchi region; about 60 cows), and Stock Farm H (in Kikuchi region; about 80 cows), which were stock farms in Kumamoto Prefecture. The coffee-containing feed was fed to dairy cows in Stock Farms A, C, E, and G. The control feed was fed to dairy cows in Stock Farms B, D, F, and H. For comparison, average milk yields in June immediately before feeding, and each average milk yield in the same month in years 2013 and 2014 are also shown. Further, an adjustment was made so that the average body weight of dairy cows for each month is almost the same. Results are shown in Tables 7 to 10.

In addition, for milks obtained from dairy cows fed with the coffee-containing feed in Stock Farms A, C, E, and G, a content of each milk component in August, 2015 was determined. Results are shown in Table 11. For comparison, a content of each milk component in the same month in the previous year is also shown.

**[Table 7]**

| Stock Farm A | Group fed with coffee-containing feed | | | | | Stock Farm B | Group fed with control feed | | | |
|---|---|---|---|---|---|---|---|---|---|---|
| Year for milking | | Mon th for mil king | | | | Year for milking | | Mon th for mil king | | |
| | | June | July | August | | | | June | July | August |
| 2013 | Average milk yield (kg/day) | 26.5 | 25.7 | 23.2 | | 2013 | Average milk yield (kg/day) | 31.6 | 29.6 | 30.9 |
| | Standard deviation | 10.3 | 10.0 | 9.3 | | | Standard deviation | 9.2 | 8.5 | 8.7 |
| 2014 | Average milk yield (kg/day) | 26.7 | 25.9 | 27.3 | | 2014 | Average milk yield (kg/day) | 28.5 | 27.6 | 28.0 |
| | Standard deviation | 8.4 | 10.7 | 9.4 | | | Standard deviation | 9.1 | 8.3 | 7.8 |
| 2015 | Average milk yield (kg/day) | 24.8 | 22.1 | 36.9 | | 2015 | Average milk yield (kg/day) | 31.8 | 31.6 | 30.6 |
| | Standard deviation | 8.6 | 8.8 | 10.2 | | | Standard deviation | 9.7 | 8.3 | 7.8 |

**[Table 8]**

| Stock Farm C | Group fed with coffee-containing feed | | | | | Stock Farm D | Group fed with control feed | | | |
|---|---|---|---|---|---|---|---|---|---|---|
| Year for milking | | Month for milking | | | | Year for milking | | Month for milking | | |
| | | June | July | August | | | | June | July | August |
| 2013 | Average milk yield (kg/day) | 28.2 | 26.6 | 23.5 | | 2013 | Average milk yield (kg/day) | 24.8 | 25.2 | 23.6 |
| | Standard deviation | 8.5 | 7.6 | 7.0 | | | Standard deviation | 7.2 | 8.1 | 8.6 |
| 2014 | Average milk yield (kg/day) | 29.2 | 25.7 | 26.6 | | 2014 | Average milk yield (kg/day) | 28.4 | 30.1 | 27.0 |
| | Standard deviation | 7.1 | 6.2 | 7.1 | | | Standard deviation | 7.2 | 8.2 | 8.2 |
| 2015 | Average milk yield (kg/day) | 29.9 | 28.8 | 31.3 | | 2015 | Average milk yield (kg/day) | 30.1 | 32.2 | 29.7 |
| | Standard deviation | 7.1 | 7.6 | 5.9 | | | Standard deviation | 10.1 | 9.7 | 8.1 |

**[Table 9]**

| Stock Farm E | Group fed with coffee-containing feed | | | | | Stock Farm F | Group fed with control feed | | | |
|---|---|---|---|---|---|---|---|---|---|---|
| Year for milking | | Month for milking | | | | Year for milking | | Month for milking | | |
| | | June | July | August | | | | June | July | August |
| 2013 | Average milk yield (kg/day) | 33.6 | 33.4 | 32.3 | | 2013 | Average milk yield (kg/day) | 29.1 | 29.7 | 29.5 |
| | Standard deviation | 9.7 | 9.5 | 8.6 | | | Standard deviation | 7.5 | 8.1 | 6.9 |
| 2014 | Average milk yield (kg/day) | 34.1 | 34.6 | 32.3 | | 2014 | Average milk yield (kq/day) | 30.0 | 30.3 | 29.2 |
| | Standard deviation | 10.1 | 10.5 | 10.1 | | | Standard deviation | 6.9 | 7.5 | 6.7 |
| 2015 | Average milk yield (kg/day) | 32.0 | 33.3 | 33.0 | | 2015 | Average milk yield (kg/day) | 33.4 | 33.5 | 31.5 |
| | Standard deviation | 11.2 | 10.8 | 9.4 | | | Standard deviation | 6.9 | 7.5 | 7.4 |

**[Table 10]**

| Stock Farm G | Group fed with coffee-containing feed | | | | | Stock Farm H | Group fed with control feed | | | |
|---|---|---|---|---|---|---|---|---|---|---|
| Year for milking | | Mon th for milking | | | | Year for milking | | Month for milking | | |
| | | June | July | August | | | | June | July | August |
| 2013 | Average milk yield (kg/day) | 32.8 | 30.5 | 27.9 | | 2013 | Average milk yield (kg/day) | 29.7 | 27.6 | 26.1 |
| | Standard deviation | 9.2 | 6.2 | 6.7 | | | Standard deviation | 9.5 | 9.0 | 8.2 |
| 2014 | Average milk yield (kg/day) | 30.8 | 28.4 | 30.1 | | 2014 | Average milk yield (kg/day) | 29.4 | 28.2 | 29.8 |
| | Standard deviation | 8.4 | 7.4 | 8.5 | | | Standard deviation | 9.6 | 8.0 | 7.1 |
| 2015 | Average milk yield (kg/day) | 31.7 | 31.3 | 31.7 | | 2015 | Average milk yield (kg/day) | 33.3 | 32.1 | 30.1 |
| | Standard deviation | 7.9 | 8.1 | 7.8 | | | Standard deviation | 9.3 | 8.0 | 8.7 |

**[Table 11]**

| Stock Farm A | Group fed with coffee-containing feed | | | | |
|---|---|---|---|---|---|
| Year/month for milking | | Milk yield (kg/day) | Milk fat (% by mass) | Milk protein (% by mass) | Non-fat milk solid (% by mass) |
| August 2014 | Average | 27.3 | 4.6 | 3.4 | 8.8 |
| | Standard deviation | 9.4 | 1.0 | 0.4 | 0.4 |
| August 2015 | Average | 36.9 | 4.4 | 3.3 | 8.7 |
| | Standard deviation | 10.2 | 0.9 | 0.4 | 0.5 |
| | | | | | |

| Stock Farm C | Group fed with coffee-containing feed | | | | |
|---|---|---|---|---|---|
| Year/month for milking | | Milk yield (kg/day) | Milk fat (% by mass) | Milk protein (% by mass) | Non-fat milk solid (% by mass) |
| August 2014 | Average | 26.6 | 3.5 | 3.5 | 8.9 |
| | Standard deviation | 7.1 | 0.7 | 0.3 | 0.3 |
| August 2015 | Average | 31.3 | 3.6 | 3.2 | 8.6 |
| | Standard deviation | 5.9 | 0.6 | 0.3 | 0.4 |
| | | | | | |

| Stock Farm E | Group fed with coffee-containing feed | | | | |
|---|---|---|---|---|---|
| Year/month for milking | | Milk yield (kg/day) | Milk fat (% by mass) | Milk protein (% by mass) | Non-fat milk solid (% by mass) |
| August 2014 | Average | 32.3 | 3.9 | 3.4 | 9.0 |
| | Standard deviation | 10.1 | 0.7 | 0.4 | 0.4 |
| August 2015 | Average | 33.0 | 3.4 | 3.2 | 8.7 |
| | Standard deviation | 9.4 | 0.7 | 0.3 | 0.4 |
| | | | | | |

| Stock Farm G | Group fed with coffee-containing feed | | | | |
|---|---|---|---|---|---|
| Year/month for milking | | Milk yield (kq/day) | Milk fat (% by mass) | Milk protein (% by mass) | Non-fat milk solid (% by mass) |
| August 2014 | Average | 30.1 | 3.8 | 3.4 | 8.8 |
| | Standard deviation | 8.5 | 0.7 | 0.4 | 0.4 |
| August 2015 | Average | 31.7 | 3.4 | 3.3 | 8.7 |
| | Standard deviation | 7.8 | 0.6 | 0.3 | 0.4 |

As shown in Tables 7 to 10, it was confirmed that an average milk yield for each stock farm where the coffee-containing feed was fed was increased in comparison to an average milk yield in the same month in each stock farm in the same region where the control feed was fed. Further, an increase was confirmed in comparison to the average milk yield in the same stock farm in the previous year or the second preceding year. In addition, as shown in Table 11, no change in the milk components that affects the quality of milk was found in the group fed with the coffee-containing feed.

### (Feeding test 4)

The feed efficiency-improving agent obtained in Test Example 2 was fed to breeding cows (F1 male), and the weight gain was evaluated as a feed efficiency-improving action. The cows were divided into: a group fed with a feed prepared by adding the feed efficiency-improving agent to a mixed feed (group fed with the coffee-containing feed); and a group fed with a mixed feed with no addition of the feed efficiency-improving agent (group fed with the control feed), wherein the both feeds had compositions indicated in Table 12. Each group was composed of five cows. The mixed feed used in this test had a CP content of 16% by mass and a TDN content of 72% by mass. Average body weights of the breeding cows at ages of 3, 5, 7, and 9 months were determined. Results are shown in Table 12.

**[Table 12]**

| Fed group | | | Fattening cattle's age in month | | | | | | |
|---|---|---|---|---|---|---|---|---|---|
| | | | 3 | 4 | 5 | 6 | 7 | 8 | 9 |
| Group fed with coffee-containing feed | Feed component | Hay (kg/day) | 0.9 | 0.9-1.5 | 1.5 | 2 | 2 | 3 | 3 |
| | | Raising feed (kg/day) | 2-3 | 3-4 | 4 | 4.5 | 5 | 4 | 2.5 |
| | | Fattening feed | - | - | - | - | - | 1 | 2.5 |
| | | Feed efficiency-improving agent (kg/day) | 0.1 | 0.1 | 0.1 | 0.1 | 0.1 | 0.1 | 0.1 |
| | Body weight | Average body weight (kg) | 118.2 | - | 201.5 | - | 283.3 | - | 368.1 |
| | | Standard deviation | 6.8 | - | 15.8 | - | 15.6 | - | 16.8 |
| | | Increase relative to 3-month old (kg) | - | - | 83.3 | - | 165.1 | - | 249.9 |
| | | | | | | | | | |
| Group fed with control feed | Feed component | Hay (kg/day) | 0.9 | 0.9-1.5 | 1.5 | 2 | 2 | 3 | 3 |
| | | Raising feed (kg/day) | 2-3 | 3-4 | 4 | 4.5 | 5 | 4 | 2.5 |
| | | Fattening feed (kg/day) | - | - | - | - | - | 1 | 2.5 |
| | Body weight | Average body weight (kg) | 117.8 | - | 198.2 | - | 269.7 | - | 350.2 |
| | | Standard deviation | 6.9 | - | 18.3 | - | 21.8 | - | 17.5 |
| | | Increase relative to 3-month old (kg) | - | - | 80.4 | - | 151.9 | - | 232.4 |

As shown in Table 12, it was confirmed that the group fed with the coffee-containing feed had a larger weight gain of fattening cattle than the group fed with the control feed. It is thus confirmed that an intake of the coffee-containing feed exhibited a feed efficiency-improving action.

### <Test Example 4: Impact 1 of a feed efficiency-improving agent in rumen>

The coffee-containing feed obtained in Test Example 3 was fed to dairy cows (Holstein: frequency of gestation of 2 to 3), and the impact on the interior of the rumen at that time of the feeding was evaluated. As a comparison subject, the comparative feed described in Test Example 3 was used. Each fed group was composed of 4 cows and the feeding was carried out for 1 month. After the end of the 1-month feeding period, gastric juice was sampled from the rumen of each fed group, and the content of each volatile fatty acid (VFA) and the concentration of ammonia in the gastric juice were measured. Contents of acetic acid, propionic acid, and butyric acid were determined as VFAs. Results are shown in Table 13.

**[Table 13]**

| Item for evaluation | | Unit | Group fed with control feed | Group fed with coffee-containing feed |
|---|---|---|---|---|
| | | | (n=4) | (n=4) |
| Properties of rumen juice | Total amount of volatile fatty acids (VFA) | mmol/dL | 6.2 | 6.4 |
| | <Composition of VFA> | | | |
| | Acetic acid | % by mass | 65.0 | 66.5 |
| | Propionic acid | % by mass | 19.8 | 21.5 |
| | Butyric acid | % by mass | 13.6 | 13.8 |
| | Mass ratio of acetic acid/propionic acid | | 3.3 | 3.1 |
| | Ammonia concentration | µg/dL | 7.2 | 6.4 |

As shown in Table 13, it was confirmed that an intake of the coffee-containing feed increased the amount of propionic acid in the rumen and decreased the ammonia concentration. It is thought that the increase of propionic acid was caused by changing the energy of methane to propionic acid. This suggests that an emission amount of methane derived from the energy of ingested feed should be decreased. In addition, it is suggested that the decrease of the ammonia concentration should alleviate loads on the liver/kidney functions and reduce the physical stress.

### <Test Example 5: Impact 2 of a feed efficiency-improving agent in rumen>

### (Growth test of bacteria (DGGE analytical test))

The coffee-containing feed obtained in Test Example 3 was mixed in an amount of 1.5 kg/day relative to 30 kg/day of basal diet to prepare a feed. The feed was fed to 3 dairy cows (A, B, and C) (Holstein: frequency of gestation of 2 to 3). After 1-week feeding, the change of flora in the rumen was analyzed by DGGE.

Time-dependent changes of flora between each individual (A, B, and C) before the feeding and each individual (A', B', and C') after 1-week feeding were evaluated by DGGE (denaturing gradient gel electrophoresis). DGGE is a test that uses a gel containing a DNA denaturant, such as urea, with concentration gradients for electrophoresis thereby to conduct separation of DNA based on GC-ratio and AT-ratio inherent to the species. Base analysis was conducted on DNA bands obtained by electrophoresis thereby to estimate a taxonomical group, to which the strain giving an origin of each band belongs.

In this analytical test, known DGGE and base analysis were employed. That is, in this test, 10% polyacrylamide gel and urea (having concentration gradients from 30 to 60%) as a DNA denaturant were used for electrophoresis, and the electrophoresis was conducted at 200 V for 4 hours. After the electrophoresis, the gel was stained by SYBER Green (manufactured by Takara Bio Inc.), and bands emitting light under UV (310 nm) irradiation were photographed. Results of the electrophoresis are shown in Fig. 1. In Fig. 1, for easy visual identification of the position of a band, a photograph of the electrophoresis results is shown in such a manner that white and black colors are reversed.

As shown in Fig. 1, it was not found that the coffee-containing feed caused a remarkable change in the flora in the rumen.

### (Measurement of archaebacteria)

Amounts of archaebacteria in the rumen of each individual (A, B, and C) before the feeding and each individual (A', B', and C') after 1-week feeding were measured by quantitative PCR using an archaebacterial probe. As the archaebacterial probe, 16SrDNA V3 region (about 175 bp) for archaebacteria was used.

DNA prepared as a sample from rumen juice of 3 dairy cows of each of the groups before and after the feeding was used as a template, and quantitative PCR was conducted on those obtained by repeating 1/3 dilution. Detection of DNA from a higher dilution ratio indicates the presence of a lot of archaebacteria. Results are shown in Table 14. For each diluted solution in the table, a solution with the detection of archaebacteria is expressed by "+" while a solution with no detection is expressed by "-".

**[Table 14]**

| Dilution ratio | A | A' | B | B' | C | C' |
|---|---|---|---|---|---|---|
| 3 | + | + | + | + | + | + |
| 9 | + | + | + | + | + | + |
| 27 | + | + | + | + | + | + |
| 81 | + | + | + | + | + | + |
| 243 | + | - | + | - | + | - |
| 729 | + | - | + | - | + | - |
| 2187 | + | - | + | - | + | - |
| 6561 | + | - | + | - | + | - |
| 19683 | - | - | - | - | - | - |
| 59049 | - | - | - | - | - | - |
| 177147 | - | - | - | - | - | - |
| 531441 | - | - | - | - | - | - |

From results shown in Table 14, it was confirmed that archaebacteria including methane bacteria was decreased from 1/9 to 1/243 by feeding of the coffee-containing feed. It is thought that a decrease of methane bacteria is caused by a feed shortage or the like for methane bacteria, which is attributable to a reduction of hydrogen ion concentration.

## Claims

1. A feed efficiency-improving agent for livestock comprising a coffee component, the improving agent being fermented by a bacteriocin-producing lactic acid bacterium.

2. The feed efficiency-improving agent for livestock according to claim 1, wherein the coffee component comprises at least one selected from hydroxycinnamic acids and esters thereof.

3. The feed efficiency-improving agent for livestock according to claim 1 or 2, wherein the bacteriocin-producing lactic acid bacterium is at least one selected from *Lactobacillus delbrueckii subsp. lactis* and *Lactobacillus brevis.*

4. The feed efficiency-improving agent for livestock according to any one of claims 1 to 3, wherein the livestock is a ruminant.

5. A weight gain-promoting feed for livestock comprising a coffee component and a component fermented by a bacteriocin-producing lactic acid bacterium.

6. The weight gain-promoting feed for livestock according to claim 5, wherein
the coffee component comprises at least one selected from hydroxycinnamic acids and esters thereof, and
the bacteriocin-producing lactic acid bacterium is at least one selected from *Lactobacillus delbrueckii subsp. lactis* and *Lactobacillus brevis.*

7. A method for raising livestock comprising:
mixing a feed efficiency-improving agent according to any one of claims 1 to 4 with a feed; and
administering or feeding the mixture to the livestock.

8. A method for reducing methane generation comprising:
mixing a feed efficiency-improving agent according to any one of claims 1 to 4 with a feed;
administering or feeding the mixture to the livestock; and
raising the livestock.
